# EUROPEAN PATENT SPECIFICATION

(11) **EP 1 311 427 B1**
(45) Date of publication and mention of the grant of the patent: **14.02.2007**
(21) Application number: 01963134.0
(22) Date of filing: 24.08.2001
(51) Int. Cl.: B64F 1/36, B60P 3/00

(54) **AIRCRAFT SUPPORT VEHICLE**
FLUGZEUGVERSORGUNGSFAHRZEUG
VEHICULE DE SOUTIEN D'AERONEF

(30) Priority: 25.08.2000 GB 0020970
(43) Date of publication of application: 21.05.2003
(73) Proprietor: BAE Systems PLC, Farnborough, Hampshire GU14 6YU (GB)
(72) Inventor: Murray, Angus John Fraser, Preston, Lancashire PR4 4AN (GB); Simpson, Neil William, Preston, Lancashire PR4 2XH (GB); Watson, Ian Matthew, Preston, Lancashire PR3 0UY (GB)
(74) Representative: Newell, William Joseph
(86) International application number: PCT/GB2001/003794
(87) International publication number: WO 2002/016203

(56) References cited:
- EP-A- 0 350 615
- DE-A- 3 423 867
- US-A- 2 448 172
- US-A- 2 968 923
- US-A- 3 866 701
- US-A- 4 171 114

## Description

This invention relates to aircraft support vehicles for providing support services for aircraft and in particular, but not exclusively, to self-propelled multi-purpose support vehicles capable of operating in a wide range of terrains.

The operators of military aircraft have to support operations in many locations often far from their main operating base and with few facilities at the remote location. This means that they must transport all the required equipment, incurring large logistics penalties and cost. At present aircraft support functions such as ground electrical power, hydraulic power, low pressure air and high pressure gas supplies etc., are provided by separate items of aerospace ground equipment usually mounted on towed trailers requiring a tractor unit to move them between operating areas. Any method of reducing the quantity of equipment will be an advantage to the operator.

US Patent No. 3,886,701 describes a ground support unit for servicing aircraft including a tractor unit with a generator on the back of the unit and driven off the tractor powerplant. This device simply provides electrical power. It cannot supply any of the other services required by military aircraft.

US-A-4476743 discloses a mechanism for the selective driving of machines or devices for the power take off shaft of an agricultural tractor. In this device the input drive can be applied to one or the other of two output shafts. The clutch is not independently operable.

The present invention is therefore concerned with reducing the logistics burden or logistics "footprint" by combining functions previously provided in separate towed items of aerospace ground equipment.

Accordingly, in one aspect, this invention provides a self-propelled aircraft ground support vehicle, said vehicle comprising:-
a wheeled main body portion;
a cab portion containing driver controls for the vehicle;
a main power unit;
a ground wheel drive train connected to the power unit for transmitting drive from the power unit to at least two of the vehicle wheels;
an aircraft accessory gearbox connected to the power unit and supplying drive to at least four aircraft service devices, including a low pressure air compressor and a high pressure air compressor, and
independently operable clutches between said power unit and said ground wheel drive train and said aircraft services gearbox respectively.

Preferably the aircraft service devices include one or more of the following service devices:-
a hydraulic pump;
an electrical generator, and
a cooling device.

By this arrangement the need for separate towed aerospace ground equipment is obviated and a multifunctional vehicle may be provided which is capable of operation over a wide range of terrain.

The construction of the support vehicle may be modular to enable it readily to be configured during manufacture for one of several different uses.

Preferably the vehicle includes respective independent clutch means between the power unit and the ground wheel drive train, and between the power unit and said aircraft accessory gearbox respectively.

The control means for selecting and controlling the services driven by the aircraft accessory gearbox is preferably provided within the cab portion although auxiliary controls may be provided elsewhere in the vehicle at an externally accessible location.

The power unit preferably comprises a dual fuel internal combustion engine capable of running on aviation fuel (AVTUR) or diesel fuel.

Preferably, the ground wheel drive train transmits drive to four or more vehicle wheels.

Preferably said main body portion includes externally accessible inlet/outlet connections for at least some of the services driven by said aircraft accessory gearbox. For convenience and speed of operation, the main body portion may include externally accessible duplicate inlet/outlet connections to opposite sides of the main body portion for at least some of said services.

Preferably said main body portion includes a load space for carrying support equipment. The support equipment may comprise one or more of:-
a towing arm;
gas storage vessels;
test equipment;
crash recovery equipment;
a fork lift device;
a hoist, and
tools.

Preferably said main body portion includes shutter means for closing said load space.

Preferably the load space is covered by a covered roof which is strengthened to serve as a work platform. One or more movable floodlights may be provided on the roof or elsewhere on the vehicle.

The vehicle also preferably includes a towing point on the front and/or rear of the vehicle. Likewise the vehicle preferably includes a winch means on the front and/or rear of the vehicle.

The invention may be performed in various ways, and an embodiment thereof will now be described, by way of example only, reference being made to the accompanying drawings in which:-
Figure 1 is a front perspective view of a multi-purpose ground support vehicle in accordance with this invention;
Figure 2 is a section view looking down through the floor area of the multi-purpose support vehicle of Figure 1;

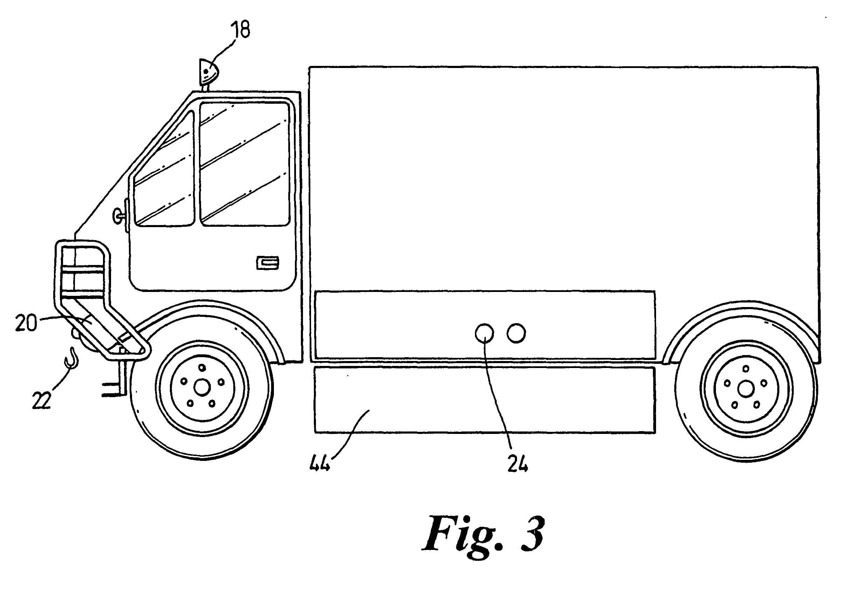

Figure 3 is a side view of the multi-purpose support vehicle of Figure 1, and
Figure 4 is a perspective view from the rear showing the equipment load space of the multi-purpose support vehicle of Figure 1.

The multi-purpose support vehicle illustrated in the Figures combines several aerospace ground equipment functions into a single, self-propelled vehicle with rough terrain capability and the ability to be tailored in terms of the on-board features through a modular build concept. The vehicle illustrated is intended to be built on the basis of an existing four wheel drive all-terrain vehicle.

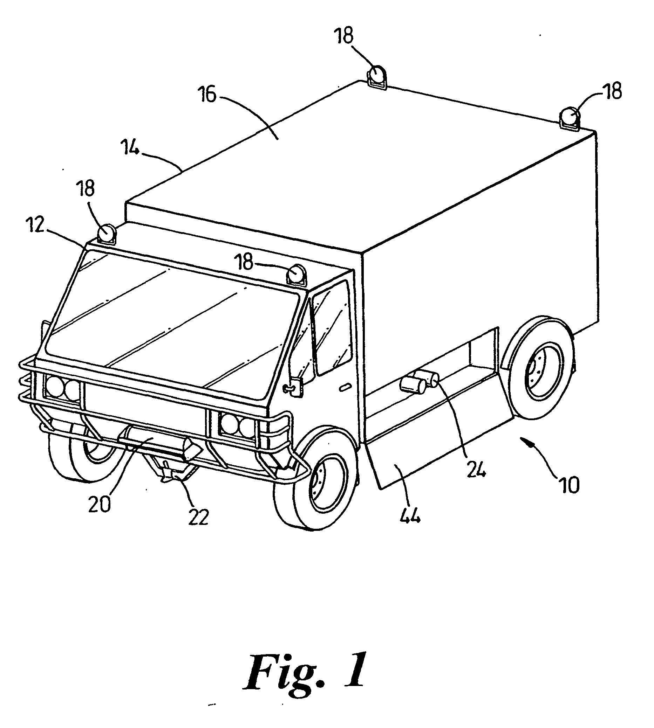

Referring initially to Figure 1, the vehicle 10 comprises a cab portion 12, a load space 14 and, in this embodiment, four wheels. The load space 14 has a strengthened roof 16 which may be used as a work platform. Movable floodlights 18 are disposed at the upper four corners of the vehicle. At the front of the vehicle there is provided a winch 20 and a towing hitch 22. To the left and right hand sides of the vehicle is a connector bay 24.

Whilst not shown, the strengthened roof 16 may be provided with retractable safety rails (not shown), with the roof being accessible via an access ladder.

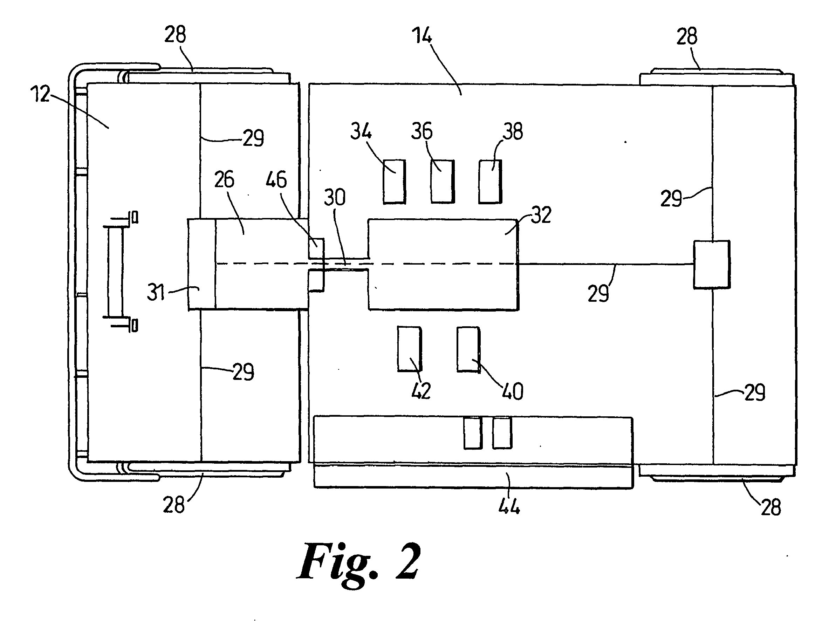

Referring now to Figure 2, the vehicle engine 26 is connected to the four road wheels 28 by a generally conventional four wheel drive power train indicated schematically by lines 29, via a clutch 31. The engine 26 is capable of running on either diesel or AVTUR. A power offtake shaft 30 from the engine supplies power to an aircraft services gearbox or aircraft accessory drive 32. This may be based on an existing aircraft gearbox and modified to suit requirements. In the illustrated embodiment, the aircraft services gearbox has a single input drive. However if a specialised input drive is required (e.g. airflow or pressure) it may be necessary to drive the aircraft services gearbox from a separate power source e.g. a small gas turbine. The aircraft services gearbox 32 in this embodiment supplies power to a system cooling device 34, a low pressure air compressor 36, a high pressure air compressor 38, an electrical generator 40, and a hydraulic pump 42. The system cooling device 34 provides additional cooling for the aircraft avionic systems if the onboard aircraft cooling system is not capable of maintaining the avionics system within the required temperature range - for example if the external air temperature is very high. The system cooling device may therefore comprise the components found on a conventional towed ground cooling trolley. The number of output drives and aircraft services so provided will vary in number and configuration depending on the aircraft type for which the multi-purpose support vehicle is being configured. In many instances, the aircraft services gearbox will be the same item, or modified from the same item, as is fitted to the aircraft for which the multipurpose support vehicle is being configured.

The services (34 to 42) are supplied to respective connectors (only two of which are shown) in the connector bays 24 to either side of the vehicle (only one of which is shown in Figure 2). The connector bays are each accessible via a closeable door 44. A clutch 46 allows the power to the aircraft services gearbox to be disengaged.

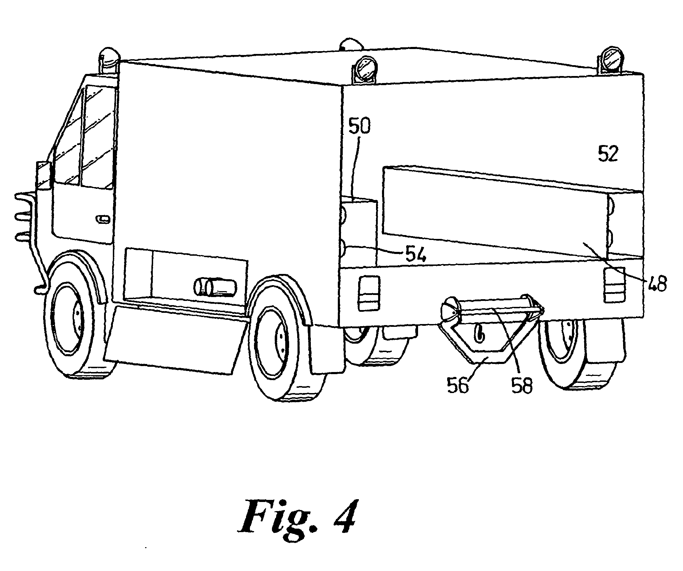

Referring now to Figure 4, the load space 14 may house test equipment, crash recovery equipment, tools or other items such as a forklift and a hoist, as required. The load space may be closed by means of a roller shutter or the like (not shown). The load space may also include lockers 48 and 50 for storing a towing arm (in dismantled form) and one or more gas bottles 54. At the rear of the vehicle is provided a further towing hitch 56 and a further winch 58.

It is emphasised that the number and nature of the aircraft services may vary from those described above, which are examples only. The modular nature of the system allows other services to be accommodated, depending on specific aircraft requirements. Likewise the contents of the load department will be selected according to specific aircraft requirements.

## Claims

1. A self propelled aircraft ground support vehicle (10), said vehicle comprising:-
a wheeled main body portion;
a cab portion (12) containing driver controls for the vehicle;
a main power unit (26);
a ground wheel drive train (29) connected to the power unit (26) for transmitting drive from the power unit to at least two of the vehicle wheels;
an aircraft accessory gearbox (32) connected to the power unit (26) and supplying drive to at least four aircraft service devices, including a low pressure air compressor (36) and a high pressure air compressor (38), and
independently operable clutches between said power unit and said ground wheel drive train and said aircraft services gearbox (32) respectively.

2. A self propelled ground support vehicle according to claim 1, wherein said at least four aircraft service devices includes one or more of the following devices:
a hydraulic pump (42);
an electrical generator (40), and
a cooling device (34).

3. A self-propelled ground support vehicle according to any preceding claim, wherein control means for selecting and controlling the services driven by said aircraft accessory gearbox (32) is provided in said cab portion (12).

4. A self-propelled vehicle according to any of the preceding Claims, wherein said main power unit (26) comprises a dual fuel internal combustion engine capable of running on aviation fuel (AVTUR) or diesel fuel.

5. A self-propelled vehicle according to any of the preceding Claims, wherein said ground wheel drive train (29) transmits drive to four or more vehicle wheels (28).

6. A self-propelled vehicle according to any of the preceding Claims, wherein said main body portion includes externally accessible service inlet/outlet connections for at least some of the services driven by said aircraft accessory gearbox.

7. A self-propelled vehicle according to Claim 6, wherein said main body portion includes externally accessible duplicate inlet/outlet connections to opposite sides of the main body portion for at least some of said services.

8. A self-propelled vehicle according to any of the preceding Claims, wherein said main body portion includes an externally accessible load space for carrying support equipment.

9. A self-propelled vehicle according to Claim 8, wherein said support equipment comprises one or more of:
a towing arm
gas storage vessels (54)
test equipment
crash recovery equipment
a forklift device
a hoist
tools.

10. A self-propelled vehicle according to Claim 8 or Claim 9, wherein said main body portion includes shutter means for closing said load space.

11. A self-propelled vehicle according to any of Claims 8 to 10, wherein said load space is covered by a strengthened roof (16).

12. A self-propelled vehicle according to any of the preceding Claims including one or more moveable floodlights (18).

13. A self-propelled vehicle according to any of the preceding Claims, which includes a towing point (22) on the front and/or rear of the vehicle.

14. A self-propelled vehicle according to any of the preceding Claims, which includes a winch means (20) on the front and/or rear of the vehicle.

## Patentansprüche

1. Ein Flugzeugbodenversorgungsfahrzeug (10) mit Eigenantrieb, wobei das Fahrzeug Folgendes beinhaltet:
einen Hauptkörperabschnitt mit Rädern;
einen Fahrerkabinenabschnitt (12), der Fahrersteuerungen für das Fahrzeug enthält;
ein Haupttriebwerk (26);
einen Antriebsstrang für Bodenräder (29), der zum Übertragen von Antrieb von dem Triebwerk auf mindestens zwei der Fahrzeugräder mit dem Triebwerk (26) verbunden ist;
ein Flugzeughilfsgerätegetriebe (32), das mit dem Triebwerk (26) verbunden ist und mindestens vier Flugzeugbetriebsvorrichtungen, einschließlich eines Niederdruckluftverdichters (36) und eines Hochdruckluftverdichters (38), mit Antrieb versorgt, und
unabhängig betriebsfähige Kupplungen zwischen dem Triebwerk und dem Antriebsstrang für Bodenräder bzw. dem Flugzeugbetriebsgetriebe (32).

2. Bodenversorgungsfahrzeug mit Eigenantrieb gemäß Anspruch 1, wobei die mindestens vier Flugzeugbetriebsvorrichtungen eine oder mehrere der folgenden Vorrichtungen umfassen:
eine Hydraulikpumpe (42);
einen elektrischen Generator (40), und
eine Kühlvorrichtung (34).

3. Bodenversorgungsfahrzeug mit Eigenantrieb gemäß einem der vorhergehenden Ansprüche, wobei ein Steuermittel zum Auswählen und Steuern der von dem Flugzeughilfsgerätegetriebe (32) angetriebenen Leistungen in dem Fahrerkabinenabschnitt (12) bereitgestellt sind.

4. Fahrzeug mit Eigenantrieb gemäß einem der vorhergehenden Ansprüche, wobei das Haupttriebwerk (26) einen Zweistoff-Verbrennungsmotor beinhaltet, der mit Flugkraftstoff (AVTUR) oder Dieselkraftstoff laufen kann.

5. Fahrzeug mit Eigenantrieb gemäß einem der vorhergehenden Ansprüche, wobei der Antriebsstrang für Bodenräder (29) auf vier oder mehr Fahrzeugräder (28) Antrieb überträgt.

6. Fahrzeug mit Eigenantrieb gemäß einem der vorhergehenden Ansprüche, wobei der Hauptkörperabschnitt extern zugängliche Leistungseinlass-/-auslassverbindungen für mindestens einige der von dem Flugzeughilfsgerätegetriebe angetriebenen Leistungen umfasst.

7. Fahrzeug mit Eigenantrieb gemäß Anspruch 6, wobei der Hauptkörperabschnitt extern zugängliche doppelte Einlass-/Auslassverbindungen an gegenüberliegende Seiten des Hauptkörperabschnitts für mindestens einige der Leistungen umfasst.

8. Fahrzeug mit Eigenantrieb gemäß einem der vorhergehenden Ansprüche, wobei der Hauptkörperabschnitt einen extern zugänglichen Laderaum zum Tragen von Versorgungsausrüstung umfasst.

9. Fahrzeug mit Eigenantrieb gemäß Anspruch 8, wobei die Hilfsausrüstung eins oder mehrere von Folgendem beinhaltet:
einen Abschlepparm
Behälter zur Gaslagerung (54)
Testausrüstung
**Unfall-Bergungs-Ausrüstung**
eine Gabelstapler-Vorrichtung
einen Hebezug
Werkzeuge.

10. Fahrzeug mit Eigenantrieb gemäß Anspruch 8 oder Anspruch 9, wobei der Hauptkörperabschnitt Verschlussmittel zum Schließen des Laderaums umfasst.

11. Fahrzeug mit Eigenantrieb gemäß einem der Ansprüche 8 bis 10, wobei der Laderaum mit einem verstärkten Dach (16) abgedeckt wird.

12. Fahrzeug mit Eigenantrieb gemäß einem der vorhergehenden Ansprüche, das einen oder mehrere bewegliche Scheinwerfer (18) umfasst.

13. Fahrzeug mit Eigenantrieb gemäß einem der vorhergehenden Ansprüche, das einen Abschlepppunkt (22) auf der Vorderseite und/oder der Rückseite des Fahrzeugs umfasst.

14. Fahrzeug mit Eigenantrieb gemäß einem der vorhergehenden Ansprüche, das ein Windemittel (20) auf der Vorderseite und/oder der Rückseite des Fahrzeugs umfasst.

## Revendications

1. Un véhicule de soutien au sol autopropulsé pour aéronef (10), ledit véhicule comprenant :
une partie formant un corps principal à roues ;
une partie formant cabine (12) contenant des commandes de conducteur pour le véhicule ;
une unité d'alimentation principale (26) ;
un train d'entraînement de roues au sol (29) raccordé à l'unité d'alimentation (26) pour transmettre un entraînement de l'unité d'alimentation à au moins deux des roues du véhicule ;
un boîtier d'entraînement des accessoires pour aéronef (32) raccordé à l'unité d'alimentation (26) et fournissant un entraînement à au moins quatre dispositifs de service pour aéronef, incluant un compresseur d'air à basse pression (36) et un compresseur d'air à haute pression (38), et
des embrayages pouvant être actionnés de façon indépendante entre ladite unité d'alimentation et ledit train d'entraînement de roues au sol et ledit un boîtier d'entraînement des services pour aéronef (32) respectivement.

2. Un véhicule de soutien au sol autopropulsé selon la revendication 1, dans lequel lesdits au moins quatre dispositifs de service pour aéronef incluent un ou plusieurs des dispositifs suivants :
une pompe hydraulique (42) ;
un générateur électrique (40), et
un dispositif de refroidissement (34).

3. Un véhicule de soutien au sol autopropulsé selon n'importe quelle revendication précédente, dans lequel le moyen de commande destiné à sélectionner et commander les services entraînés par ledit boîtier d'entraînement des accessoires pour aéronef (32) est prévu dans ladite partie formant cabine (12).

4. Un véhicule autopropulsé selon n'importe lesquelles des revendications précédentes, dans lequel ladite unité d'alimentation principale (26) comprend un moteur à combustion interne à deux carburants capable de fonctionner au carburant aviation (AVTUR) ou au carburant diesel.

5. Un véhicule autopropulsé selon n'importe lesquelles des revendications précédentes, dans lequel ledit train d'entraînement de roues au sol (29) transmet un entraînement à quatre roues ou plus du véhicule (28).

6. Un véhicule autopropulsé selon n'importe lesquelles des revendications précédentes, dans lequel ladite partie formant corps principal inclut des raccords d'entrée / de sortie de service accessibles de façon externe pour au moins certains des services entraînés par ledit boîtier d'entraînement des accessoires pour aéronef.

7. Un véhicule autopropulsé selon la revendication 6, dans lequel ladite partie formant un corps principal inclut des raccords d'entrée / de sortie doubles accessibles de façon externe à des côtés opposés de la partie formant corps principal pour au moins certains desdits services.

8. Un véhicule autopropulsé selon n'importe lesquelles des revendications précédentes, dans lequel ladite partie formant un corps principal inclut un espace pour charge qui est accessible de façon externe et qui est destiné à porter un équipement de soutien.

9. Un véhicule autopropulsé selon la revendication 8, dans lequel ledit équipement de soutien comprend un ou plusieurs éléments parmi :
un bras de remorquage
des cuves de stockage de gaz (54)
un équipement de test
un équipement de récupération suite à un écrasement
un dispositif élévateur à fourche
un dispositif de hissage
des outils.

10. Un véhicule autopropulsé selon la revendication 8 ou la revendication 9, dans lequel ladite partie formant un corps principal inclut un moyen formant volet pour fermer ledit espace pour charge.

11. Un véhicule autopropulsé selon n'importe lesquelles des revendications 8 à 10, dans lequel ledit espace pour charge est recouvert d'un toit renforcé (16).

12. Un véhicule autopropulsé selon n'importe lesquelles des revendications précédentes incluant un ou plusieurs projecteurs mobiles (18).

13. Un véhicule autopropulsé selon n'importe lesquelles des revendications précédentes, lequel inclut un point de remorquage (22) sur l'avant et / ou l'arrière du véhicule.

14. Un véhicule autopropulsé selon n'importe lesquelles des revendications précédentes, lequel inclut un moyen formant treuil (20) sur l'avant et / ou l'arrière du véhicule.
